# EUROPÄISCHE PATENTSCHRIFT

(11) **EP 0 401 654 B1**
(45) Veröffentlichungstag und Bekanntmachung des Hinweises auf die Patenterteilung: **10.02.1993**
(21) Anmeldenummer: 90110217.8
(22) Anmeldetag: 30.05.1990
(51) Int. Cl.: G01D 5/38, G02B 6/12, G02B 6/34

(54) **Vorrichtung zum Ein- und/oder Auskoppeln von Lichtstrahlen mit einem integriert-optischen Baustein**
Device for coupling and/or uncoupling of light beams with an integrated optical element
Dispositif de couplage et/ou découplage des rayons lumineux avec élément d'optique intégré

(30) Priorität: 08.06.1989 DE 3918726
(43) Veröffentlichungstag der Anmeldung: 12.12.1990
(73) Patentinhaber: Dr. Johannes Heidenhain GmbH, D-83292 Traunreut (DE)
(72) Erfinder: Allgäuer, Michael, Dipl.-Phys., D-8221 Stein (DE)

(56) Entgegenhaltungen:
- EP-A- 0 276 395
- DE-A- 3 536 497
- PATENT ABSTRACTS OF JAPAN Band 13, Nr. 27 (P-815)(3375), 20. Januar 1989; & JP - A - 63225929 (MATSUSHITA ELECTRIC) 20.09.1988

## Beschreibung

Die Erfindung bezieht sich auf eine lichtelektrische Vorrichtung gemäß dem Oberbegriff des Anspruches 1.

Derartige Vorrichtungen werden in zunehmendem Maße in der Längen- und Winkelmeßtechnik angewandt, um möglichst klein bauende und störungsunanfällige Positionsmeßeinrichtungen herstellen zu können.

Eine miniaturisierte Positionsmeßeinrichtung ist beispielsweise Gegenstand der DE 36 25 327 C1. Aus dieser Druckschrift, sowie aus dem dort genannten Stand der Technik ist es prinzipiell bekannt, mit Hilfe von Einkoppelgittern Licht in Lichtwellenleiter von integrierten optischen Schaltungen einzuspeisen.

Aus dem Stand der Technik ist ferner zu entnehmen, daß Ein- oder auch Auskoppelgitter komplizierten mathematischen Zusammenhängen unterliegen und meistens elliptisch oder parabolisch verlaufen, oder noch komplizierter aufgebaut sind.

Das hat zur Folge, daß in der Praxis bisher kaum Geräte realisiert worden sind, in denen real gefertigte Gitter zum Ein- oder Auskoppeln vorhanden sind, obwohl der Bedarf an derartig miniaturisierten Positionsmeßeinrichtungen besteht. In der EP-A 0 276 395 ist eine derartige Vorrichtung beschrieben. Von dieser Druckschrift geht die Erfindung aus.

Der Erfindung liegt demgemäß die Aufgabe zugrunde, eine Vorrichtung der eingangs genannten Art anzugeben, bei der die Abstimmung der einzuspeisenden Lichtstrahlen und der Einkoppelgitter bzw. der Auskoppelgitter und der auszukoppelnden Lichtstrahlen so erfolgt, daß sich eine einfache Gitterstruktur ergibt.

Diese Aufgabe wird von einer Vorrichtung mit den Merkmalen des Anspruches 1 gelöst.

Die besonderen Vorteile der Erfindung liegen darin, daß sich Zirkulargitter relativ einfach fertigen lassen und daß sich integriert-optische Bausteine gemäß der Erfindung sehr gut bei Positionsmeßeinrichtungen einsetzen lassen.

Vorteilhafte Ausgestaltungen der Erfindung sind den Unteransprüchen zu entnehmen.

Mit Hilfe von Ausführungsbeispielen soll die Erfindung anhand der Zeichnungen noch näher erläutert werden.

Es zeigt
Figur 1 einen schematisierten Ausschnitt einer Positionsmeßeinrichtung nach dem Stand der Technik,
Figur 2 eine erfindungsgemäße Auflicht-Meßeinrichtung,
Figur 3 eine schematische Seitenansicht einer Auflicht-Meßeinrichtung mit einer Gitterkonstante GK 1,
Figur 4 eine schematische Seitenansicht einer Auflicht-Meßeinrichtung mit einer Gitterkonstante GK 2,
Figur 5 eine Durchlicht-Meßeinrichtung,
Figur 6 eine Durchlicht-Meßeinrichtung mit integrierten Linear- und Zirkulargittern,
Figur 7 eine schematische Seitenansicht einer Meßeinrichtung gemäß Figur 6 aber mit Auflichtmaßstab und
Figur 8 eine Meßeinrichtung mit zirkularem Auskoppelgitter.

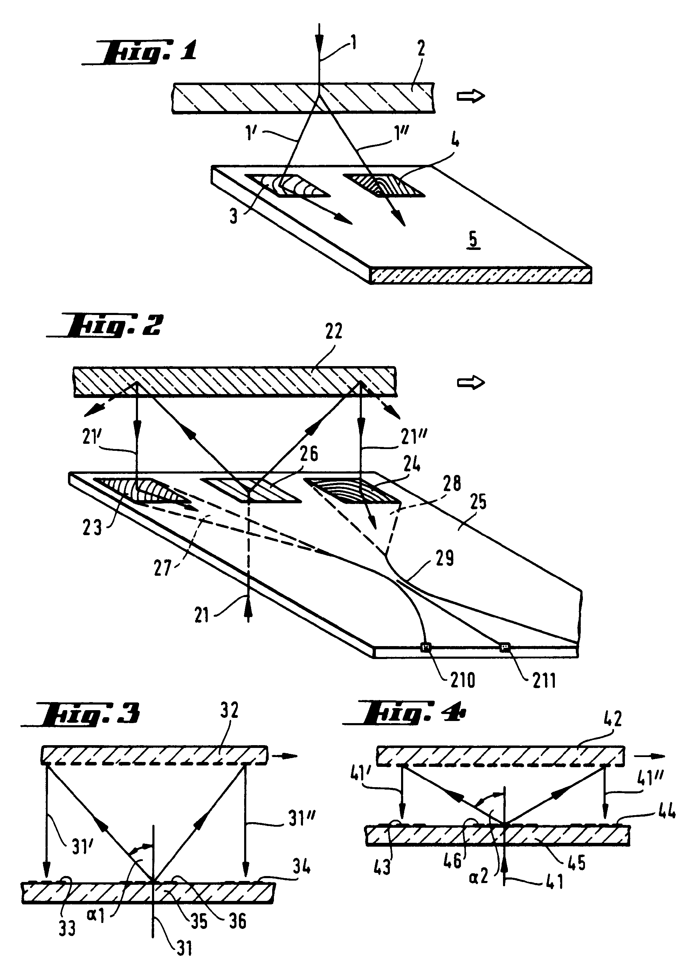

Beim in Figur 1 gezeigten Stand der Technik fällt ein Lichtstrahl 1 senkrecht auf einen als Beugungsgitter 2 ausgebildeten Maßstab einer Positionsmeßeinrichtung. Am Maßstab 2 wird der Lichtstrahl 1 gebeugt und zwei symmetrische Strahlenbündel 1′ und 1˝ werden auf zwei Einkoppelgitter 3 und 4 gelenkt, die Bestandteile eines integriert-optischen Bausteines 5 sind.

Die Einkoppelgitter 3 und 4 sind im weitesten Sinne parabolisch, wie in der eingangs zitierten DE 36 25 327 C1 noch näher angegeben ist. Während das Beugungsgitter 2 mit Gitterkonstanten zwischen 1,5 µm bis 20 µm realisiert werden kann, weisen die Einkoppelgitter 3 und 4 Gitterkonstanten in der Größenordnung von 0,5 µm auf. Daher lassen sie sich bei der notwendigerweise komplizierten Form nur mit sehr hohem Aufwand herstellen.

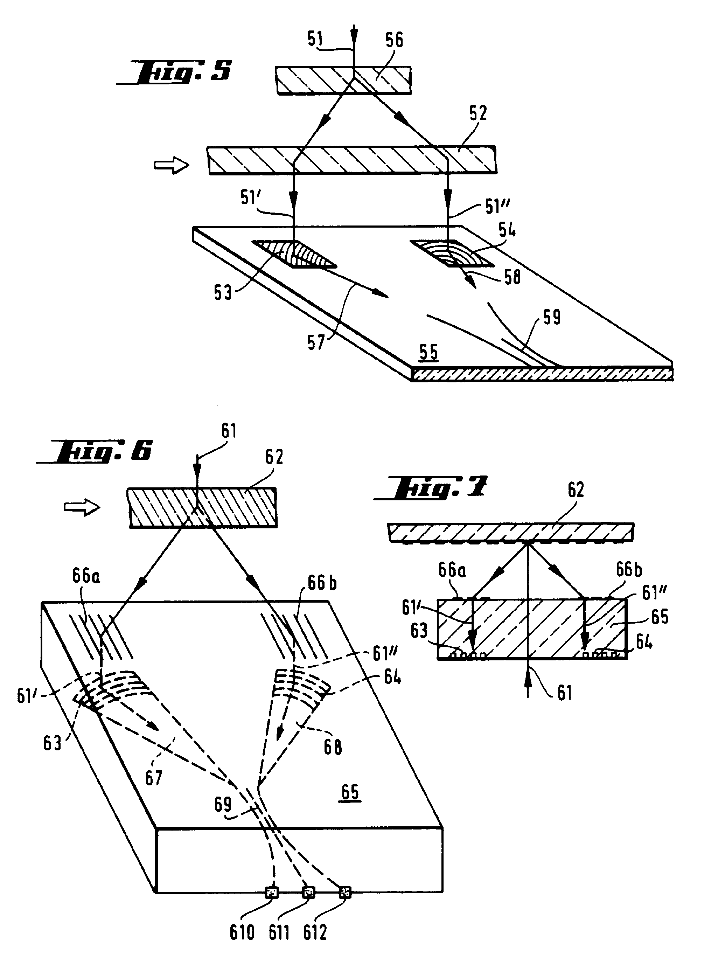

Gemäß Figur 2 fällt ein Lichtstrahl 21 von der Rückseite her auf ein Beugungsgitter 26, das Bestandteil eines integriert-optischen Bausteines 25 ist. An diesem Beugungsgitter 26 wird der Lichtstrahl 21 gebeugt und zwei symmetrische Teilstrahlenbündel 21′ und 21˝ werden auf einen Gitter-Maßstab 22 einer erfindungsgemäßen Positionsmeßeinrichtung gelenkt. Das Beugungsgitter 26 und der Gitter-Maßstab 22 haben die gleiche Gitterkonstante. Vom Gitter-Maßstab 22 werden die Teilstrahlenbündel 21′ und 21˝ reflektiert und nochmals gebeugt, so daß sie unter rechten Winkeln auf den integriert-optischen Baustein 25 treffen. An den Auftreffbereichen der Teilstrahlenbündel 21′ und 21˝

weist der integriert-optische Baustein 25 zwei Einkoppelgitter 23 und 24 auf, die als sogenannte Zirkulargitter ausgebildet sind. Zirkulargitter sind verhältnismäßig einfach auch mit der erforderlichen geringen Gitterkonstante von ca. 0,5 µm herstellbar.

Wesentlich für die Funktion des Einkoppelns mittels der Zirkulargitter 23, 24 ist der senkrechte Einfall der Teilstrahlenbündel 21′ und 21˝. Dies wird erreicht durch die Gleichheit der Gitterkonstanten des Beugungsgitters 26 und des Gitter-Maßstabes 22.

Die eingekoppelten Teilstrahlenbündel 21′ und 21˝ werden mittels planaren Lichtwellenleitern 27, 28 einem an sich bekannten Koppler 29 zugeführt, durch den sie zur Interferenz miteinander gebracht werden. Mit Hilfe von Detektoren 210, 211 und (nicht gezeigt 212) können die interferierenden Teilstrahlenbündel in zueinander phasenverschobene elektrische Signale umgewandelt werden. Dabei können die Detektoren 210, 211, 212 Bestandteile des integriert-optischen Bausteines 25 sein.

In Figur 3 bzw. 4 werden Prinzip-Ansichten von Meßeinrichtungen gemäß Figur 2 gezeigt. Daraus wird deutlich, daß für einen geeigneten (senkrecht auf die Einkoppelgitter 33, 34 bzw. 43, 44 auftreffenden) Strahlenverlauf nicht die Gitterkonstante der Beugungsgitter 36 bzw. 46 und der Gitter-Maßstäbe 32 bzw. 42 entscheidend ist, sondern nur jeweils deren Gleichheit. Durch die Wahl der jeweiligen Gitterkonstanten kann der Beugungswinkel α1 bzw. α2 und somit der Abstand der Gitter voneinander bestimmt werden.

Figur 5 zeigt eine Variante, bei der ein Beugungsgitter 56 nicht integrierter Bestandteil eines optisch-integrierten Bausteines 55 ist. Hier sind sowohl das Beugungsgitter 56 als auch ein Gitter-Maßstab 52 als Durchlichtgitter - wieder mit gleicher Gitterkonstante - ausgebildet.

Senkrecht einfallende Teilstrahlenbündel 51′ und 51˝ treffen auch in diesem Beispiel auf Zirkulargitter 53 und 54 die sie in angedeuteten Lichtwellenleitern 57 und 58 einem Koppler 59 zuleiten.

Ein weiteres Ausführungsbeispiel zeigt Figur 6, bei dem an einem Gitter-Maßstab 62 ein einfallender Lichtstrahl 61 so gebeugt wird, daß zwei symmetrische Teilstrahlenbündel 61′ und 61˝ auf zwei Beugungsgitter 66a und 66b auftreffen, die wiederum die gleiche Gitterkonstante aufweisen, wie der Gitter-Maßstab 62. Die beiden Beugungsgitter 66a und 66b sind integrierter Bestandteil eines optisch-integrierten Bausteines 65 und befinden sich auf dessen dem Gitter-Maßstab 62 zugewandten Oberseite. An den Beugungsgittern 66a und 66b werden die Teilstrahlenbündel 61′ und 61˝ so gebeugt, daß sie senkrecht auf zwei Zirkular-Einkoppelgitter 63, 64 fallen, die sich auf der Unterseite des integriert-optischen Bausteines 65 befinden. Dort befinden sich auch die angedeuteten Lichtwellenleiter 67 und 68 sowie ein Koppler 69 und drei Detektoren 610, 611 und 612.

In Figur 7 ist eine Seitenansicht der Anordnung gemäß Figur 6 dargestellt, sodaß für gleiche Elemente auch gleiche Bezugszeichen eingesetzt wurden. In dieser Figur 7 soll nur verdeutlicht werden, daß sich die Beugungsgitter 66a, 66b und die Einkoppelgitter 63, 64 auf den Oberflächen des Substrates des integriert-optischen Bausteines 65 gegenüber liegen. Allerdings weicht die Anordnung gemäß Figur 7 von der gemäß Figur 6 dadurch ab, daß der Eingangs-Lichtstrahl 61 durch das Substrat des integriert-optischen Bausteines 65 hindurch geführt und am Gitter-Maßstab 62 gebeugt und reflektiert wird.

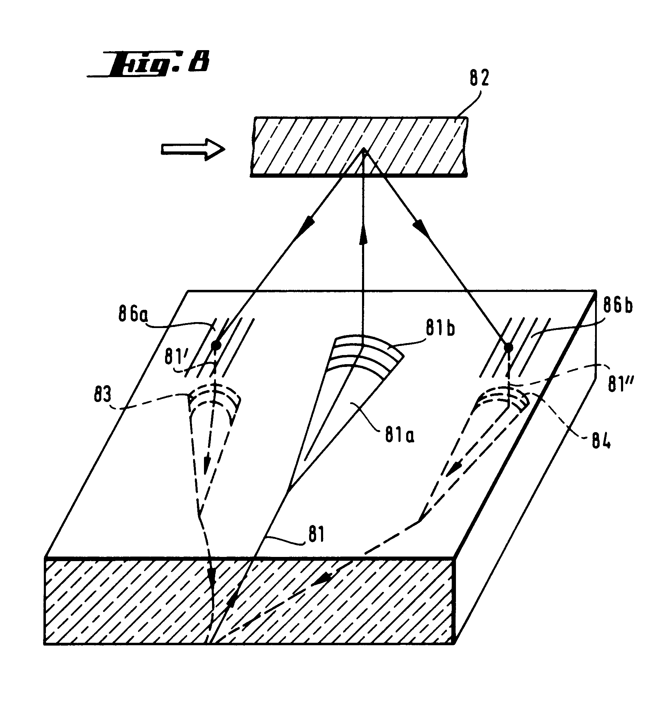

In Figur 8 ist schließlich ein Ausschnitt einer Positionsmeßeinrichtung gezeigt, bei der auch eine nicht dargestellte Lichtquelle integrierter Bestandteil des integriert-optischen Bausteines 85 ist. Der Beleuchtungsstrahl 81 wird mittels eines Lichtwellenleiters 81a in ein Auskoppelgitter 81b eingespeist. Analog zu den bereits in den anderen Ausführungsbeispielen erläuterten zirkularen Einkoppelgittern (die auch hier unter den Bezugszeichen 83 und 84 eingesetzt sind), ist das Auskoppelgitter 81b als Zirkulargitter ausgebildet, so daß der Lichtstrahl 81 senkrecht ausgekoppelt, auf einen Gitter-Maßstab 82 trifft, dort gebeugt und reflektiert wird. Die gebeugten Teilstrahlenbündel 81′ und 81˝ treffen auf Beugungsgitter 86a und 86b, an denen sie wiederum gebeugt werden. Die Beugungsgitter 86a und 86b sind integrierte Bestandteile des integriert-optischen Bausteins 85, denen auf der Unterseite des Substrates die bereits erwähnten Einkoppelgitter 83 und 84 gegenüberliegen, in die die Teilstrahlenbündel senkrecht eingespeist werden.

In der bereits zu Figur 6 beschriebenen Weise können daraus wieder zueinander phasenverschobene elektrische Signale gewonnen werden.

Am letzten Beispiel soll deutlich werden, daß grundsätzlich Ein- und Auskoppelgitter als gleichrangig angesehen werden.

## Patentansprüche

1. Lichtelektrische Vorrichtung zum Ein- und/oder Auskoppeln von Lichtstrahlen mit einem integriert-optischen Baustein (5, 25, 35, 45, 55, 65, 85), mit einer Beleuchtungsquelle und wenigstens einem ersten Beugungselement (2, 26, 36, 46, 56, 62, 82) zum Erzeugen von wenigstens einem gebeugten Strahlenbündel (21′ bis 81˝), sowie mit wenigstens einem Ein- und/oder Auskoppelelement (3, 4, 23, 24, 33, 34, 43, 44, 53, 54, 63, 64, 83, 84) zum Ein- und/oder Auskoppeln des gebeugten Strahlenbündels (21′ bis 81˝) in einen und/oder aus einem Lichtwellenleiter (27, 28, 57, 58, 67, 68, 81a), dadurch gekennzeichnet, daß das Ein- und/oder Auskoppelelement von einem Zirkulargitter (23 bis 84) gebildet wird, und daß wenigstens ein weiteres Beugungselement (22 bis 82) vorgesehen ist, das auf das erste Beugungselement (26 bis 86b) so abgestimmt ist, daß das gebeugte Strahlenbündel (21′ bis 81˝) senkrecht in das Zirkulargitter (23 bis 84) ein- bzw. aus dem Zirkulargitter (81b) austritt.

2. Lichtelektrische Vorrichtung nach Anspruch 1, dadurch gekennzeichnet, daß das erste Beugungselement als Beugungsgitter (26 bis 82) ausgebildet ist, an dem zwei symmetrische Teilstrahlenbündel (21′ bis 81˝) erzeugt werden, und daß das weitere Beugungselement ebenfalls als Beugungsgitter (22 bis 86b) ausgebildet ist, dessen Gitterkonstante mit der des ersten Beugungsgitters (26 bis 82) übereinstimmt, so daß die gebeugten Teilstrahlenbündel (21′ bis 81˝) senkrecht in zwei Zirkulargitter (23 bis 84) eintreten.

3. Lichtelektrische Vorrichtung nach Anspruch 2, dadurch gekennzeichnet, daß eines der Beugungsgitter (22 bis 82) eine Maßverkörperung einer lichtelektrischen Positionsmeßeinrichtung darstellt.

4. Lichtelektrische Vorrichtung nach Anspruch 3, dadurch gekennzeichnet, daß die Maßverkörperung (22 bis 82) und das weitere Beugungsgitter (26 bis 86b) als Lineargitter ausgebildet sind.

5. Lichtelektrische Vorrichtung nach Anspruch 3, dadurch gekennzeichnet, daß die Maßverkörperung als Radialgitter ausgebildet sind.

6. Lichtelektrische Vorrichtung nach Anspruch 4, dadurch gekennzeichnet, daß die Zirkulargitter (23 bis 84) und wenigstens eines der Beugungsgitter (26 bis 86b) Bestandteile eines integriert-optischen Bausteines (25 bis 85) sind.

7. Lichtelektrische Vorrichtung nach Anspruch 6, dadurch gekennzeichnet, daß der integriert-optische Baustein (25 bis 85) einen Koppler (29 bis 69) aufweist, in dem die eingekoppelten Teilstrahlenbündel (21′ bis 81˝) zur Interferenz gebracht, von Detektoren (210 bis 612) erfaßt und in zueinander phasenverschobene elektrische Signale umgewandelt werden.

8. Lichtelektrische Vorrichtung nach Anspruch 7, dadurch gekennzeichnet, daß die Detektoren (210 bis 612) integrierte Bestandteile des integriert-optischen Bausteines (25 bis 85) sind.

9. Lichtelektrische Vorrichtung nach Anspruch 6, dadurch gekennzeichnet, daß der integriert-optische Baustein auch die Beleuchtungsquelle aufweist.

10. Lichtelektrische Vorrichtung nach Anspruch 6, dadurch gekennzeichnet, daß der Beleuchtungsstrahlengang (81) in einem Lichtwellenleiter (81a) einem Auskoppel-Zirkulargitter (81b) zugeführt wird, das ihn so umlenkt, daß er senkrecht auf die Maßverkörperung (82) trifft.

## Claims

1. A photoelectric device for coupling in and/or coupling out light beams with an integrated optical component (5, 25, 35, 45, 55, 65, 85), with a source of illumination and at least one first diffraction element (2, 26, 36, 46, 62, 82) for generating at least one diffracted bundle of rays (21′ to 81˝), as well as with at least one coupling in and/or coupling out element (3, 4, 23, 24, 33, 34, 43, 44, 53, 54, 63, 64, 83, 84) for coupling in and/or coupling out the diffracted bundle of rays (21′ to 81˝) into and/or out of an optical waveguide (27, 28, 57, 58, 67, 68, 81a), characterized in that the coupling in and/or coupling out element is formed from a circular grating (23 to 84) and in that at least one further diffraction element (22 to 82) is provided and is so matched to the first diffraction element (26 to 86b) that the diffracted bundle of rays (21′ to 81˝) enters into the circular grating (23 to 84) perpendicular thereto or emerges from the circular grating (81a) perpendicular thereto.

2. A photoelectric device according to claim 1, characterized in that the first diffracting element is formed as a diffraction grating (26 to 82), at which two symmetrical component bundles of rays (21′ to 81˝) are generated, and in that the further diffracting element is likewise formed as a diffraction grating (22 to 86b), whose grating constant matches that of the first diffraction grating (26 to 82), so that the diffracted component bundles of rays (21′ to 81˝) enter into two circular gratings (23 to 84) perpendicular thereto.

3. A photoelectric device according to claim 2, characterized in that one of the diffraction gratings (22 to 82) represents a measuring element of a photoelectric position measuring device.

4. A photoelectric device according to claim 3, characterized in that the measuring element (22 to 82) and the further diffraction grating (26 to 86b) are formed as linear gratings.

5. A photoelectric device according to claim 3, characterized in that the measuring element is formed as a radial grating.

6. A photoelectric device according to claim 4, characterized in that the circular grating (23 to 84) and at least one of the diffraction gratings (26 to 86b) are component of an integrated optical component (25 to 85).

7. A photoelectric device according to claim 6, characterized in that the integrated optical component (25 to 85) has a coupler (29 to 69) in which the coupled in component bundles of rays (21′ to 81˝) are brought into interference, detected by detectors (210 to 612) and converted into mutually phase-displaced electric signals.

8. A photoelectric device according to claim 7, characterized in that the detectors (210 to 612) are integrated components of the integrated optical component (25 to 85).

9. A photoelectric device according to claim 6, characterized in that the integrated optical component also comprises the source of illumination.

10. A photoelectric device according to claim 6, characterized in that the illuminating ray path (81) in an optical waveguide (81a) is fed into a coupling-out circular grating (81b) which so deflects it that it emerges perpendicularly on to the measuring element (82).

## Revendications

1. Dispositif photo-électrique pour l'entrée et/ou la sortie de rayons lumineux comportant un organe optique intégré (5, 25 35, 45, 55, 65, 85), une source lumnineuse et au moins un organe de diffraction (2, 26, 36 46, 56; 62, 82) produisant au moins un faisceau de rayons diffractés (21′ à 81˝) et comportant en outre au moins un organe d'entrée et/ou de sortie (3, 4, 23, 24, 33, 34, 43, 44, 53, 54, 63, 64, 83, 84) pour l'entrée et/ou la sortie du faisceau de rayons diffractés (21′ à 81˝) dans et/ou hors d'une fibre optique (27, 28, 57, 58, 67, 68, 81 a), caractérisé par le fait que l'organe de d'entrée et/ou de sortie est constitué par un réseau circulaire (23 à 84) et qu'il est prévu au moins un organe de diffraction (22 à 82) supplémentaire qui est accordé sur le premier organe de diffraction (26 à 86b) de manière telle que le faisceau de rayons diffractés (21′ à 81˝) entre dans le réseau circulaire (23 à 84) ou sorte du réseau circulaire (81b) perpendiculairement auxdits réseaux.

2. Dispositif photo-électrique selon la revendication 1, caractérisé par le fait que le premier organe de diffraction est agencé en réseau de diffraction (26 à 82) qui produit deux faisceaux partiels (21′ à 81˝) de rayons symétriques et que l'organe de diffraction supplémentaire est lui aussi agencé en réseau de diffraction (22 à 86b) dont la constante de réseau coïncide avec celle du premier réseau de diffraction (26 à 82), de manière telle que les faisceaux partiels (21′ à 81˝) de rayons diffractés entrent perpendiculairennent dans deux réseaux circulaires (23 à 84).

3. Dispositif photo-électrique selon la revendication 2, caractérisé par le fait qu'un des réseaux de diffraction (22 à 82) est une mesure matérialisée d'un dispositif photo-électrique de mesure de position.

4. Dispositif photo-électrique selon la revendication 3, caractérisé par le fait que la mesure matérialisée (22 à 82) et le réseau de diffraction supplémentaire (26 à 86b) sont agencés en réseau linéaire.

5. Dispositif photo-électrique selon la revendication 3, caractérisé par le fait que la mesure matérialisée est agencée en réseau radial.

6. Dispositif photo-électrique selon la revendication 4, caractérisé par le fait que les réseaux circulaires (23 à 84) et au moins l'un des réseaux de diffraction (26 à 86b) font partie d'un organe optique intégré (25 à 85).

7. Dispositif photo-électrique selon la revendication 6, caractérisé par, le fait que l'organe optique intégré (25 à 85b) comporte un coupleur (29 à 69) dans lequel les faisceaux partiels (21′ à 81˝) de rayons entrants sont amenés en interférence, sont détectés par des capteurs (210 à 612) et sont transformés en signaux électriques mutuellement déphasés.

8. Dispositif photo-électrique selon la revendication 7, caractérisé par le fait que les capteurs (210 à 612) sont des organes intégrés dans l'organe optique intégré (25 à 85).

9. Dispositif photo-électrique selon la revendication 6, caractérisé par le fait que l'organe optique intégré contient également la source lumineuse.

10. Dispositif photo-électrique selon la revendication 6, caractérisé par le fait que le faisceau de rayons lumineux (81) est amené par l'intermédiaire d'une fibre optique (81a) à un réseau circulaire (81b) de sortie qui dévie ledit faisceau de manière telle que celui-ci arrive perpendiculairement sur la mesure matérialisée (82).
